# EUROPÄISCHE PATENTSCHRIFT

(11) **EP 2 872 000 B1**
(45) Veröffentlichungstag und Bekanntmachung des Hinweises auf die Patenterteilung: **26.01.2022**
(21) Anmeldenummer: 13734399.2
(22) Anmeldetag: 05.07.2013
(51) Int. Cl.: A47B 13/00, F16B 12/16

(54) **TISCHPLATTE MIT EINEM UNTERGESTELL UND EINER BEFESTIGUNGSEINRICHTUNG**
TABLE TOP WITH A SUBSTRUCTURE AND A FASTENING DEVICE
PLATEAU DE TABLE AVEC UN CADRE ET UN DISPOSITIF DE FIXATION

(30) Priorität: 10.07.2012 DE 202012102539 U
(43) Veröffentlichungstag der Anmeldung: 20.05.2015
(73) Patentinhaber: Severin Holz und Kunststoff GmbH, 59469 Ense (DE)
(72) Erfinder: SEVERIN, Heinz-Bernd, 59494 Soest (DE)
(74) Vertreter: Fritz, Edmund Lothar
(86) Internationale Anmeldenummer: PCT/EP2013/064240
(87) Internationale Veröffentlichungsnummer: WO 2014/009268

(56) Entgegenhaltungen:
- US-A- 5 718 179

## Beschreibung

Die vorliegende Erfindung betrifft eine Einrichtung umfassend eine Tischplatte, ein Untergestell sowie Befestigungsschrauben, wobei das Untergestell ein Befestigungskreuz oder einen Befestigungsteller aufweist, auf dem die Tischplatte aufliegt und wobei das Untergestell unterseitig an der Tischplatte anzuschrauben ist, wobei dieses Befestigungskreuz oder dieser Befestigungsteller ein definiertes Lochbild mit mehreren Löchern oder Aufnahmen für die jeweils durch diese Löcher hindurch zu steckenden Befestigungsschrauben aufweist, mittels derer das Befestigungskreuz oder der Befestigungsteller an der Tischplatte angeschraubt wird,
wobei die Tischplatte in ihre Unterseite eingebrachte Schlitze oder Nuten aufweist, die so verlaufen, dass sie sich bei Auflegen der Tischplatte auf das Befestigungskreuz oder den Befestigungsteller, mit den Löchern oder Aufnahmen des Befestigungskreuzes oder Befestigungstellers zur Deckung bringen lassen und wobei die Befestigungsschrauben jeweils in den Schlitzen oder Nuten in die Tischplatte einschraubbar sind, wobei wenigstens zwei sich entlang einer Linie erstreckende Schlitze oder Nuten vorgesehen sind, die jeweils durch nicht geschlitzte Abschnitte der Tischplatte unterbrochen sind.

Nach dem derzeitigen Stand der Technik liefern die Hersteller von Tischplatten aus HPL-Werkstoffen (high pressure laminate) diese an Großhändler oder verarbeitende Betriebe, welche daraus Tische herstellen, indem sie die Tischplatten je nach Kundenwunsch auf Untergestelle unterschiedlicher Form und Größe montieren. Problematisch ist hierbei, dass es die Untergestelle in sehr unterschiedlichen Typen, Formen und Größen gibt. In der Regel wird die Tischplatte mit ihrer Unterseite auf ein Befestigungskreuz montiert, welches an mehreren Stellen, beispielsweise vier oder acht Löcher oder Aufnahmen für Schrauben zur Befestigung der Tischplatte aufweist. Da die Befestigungskreuze für die Untergestelle sehr unterschiedliche Lochbilder aufweisen, müsste der Lieferant für jedes dieser unterschiedlichen Untergestelle jeweils eine Tischplatte mit entsprechend passendem Bohrbild liefern, damit die Tischplatte auf das jeweilige Untergestell passt. Dies führt bei dem Großhändler oder verarbeitenden Betrieb, der die Tische montiert zu einer sehr aufwändigen Lagerhaltung.

Alternativ dazu wäre es auch möglich, dass der montierende Betrieb Tischplatten ohne Bohrlöcher bezieht und je nachdem, auf welches Untergestell die jeweilige Tischplatte montiert werden soll, die notwendigen Löcher bei der Montage gebohrt werden. Dies ist jedoch ein relativ schwieriger Vorgang, wofür hochwertige Maschinen notwendig sind, mittels derer die Bohrlöcher mit ausreichender Präzision in die Tischplatten gebohrt werden können und entsprechend geschultes Personal. Es ist zu bedenken, dass der HPL-Werkstoff, aus dem diese Tischplatten in der Regel bestehen, ein Werkstoff mit vergleichsweise großer Härte ist, so dass man für die Bearbeitung Werkzeuge aus Diamant oder Hartmetall benötigt. Die Maschinen und das geschulte Personal sind bei den montierenden Betrieben, die eher den Charakter von Handelsunternehmen haben und über keine eigene industrielle Herstellung verfügen, jedoch in der Regel nicht vorhanden. Als weitere Alternative kann noch eine Klebeverbindung angeführt werden, welche jedoch aufgrund des Einsatzgebietes im Innen- und Außenbereich, durch wechselnde Wärme und Feuchtigkeitsbereiche, keine dauerhafte, verlässliche Verbindung darstellt.

Aus der US 5,718,179 A ist eine Tischplatte mit Untergestell sowie Befestigungseinrichtung für die Befestigung der Tischplatte an diesem Untergestell mit den eingangs genannten Merkmalen bekannt, bei der das Untergestell ein Befestigungskreuz mit spinnenartigen Armen umfasst, an deren flachen Endbereichen ein Lochmuster mit jeweils drei Löchern vorgesehen ist, wobei an der Unterseite der Tischplatte schlüssellochförmige Aussparungen geformt sind, in die Schrauben, die durch die Endbereiche der Arme des Untergestells hindurchgreifen, eingeschraubt werden. Durch die schlüssellochförmigen Aussparungen und das Lochmuster im Untergestell sind die Positionen für die Schraubbefestigung genau vorgegeben und es ist nicht vorgesehen, die Schraubposition in Längsrichtung der Schlitze zu variieren.

Ausgehend von dem vorgenannten Stand der Technik besteht die Aufgabe der vorliegenden Erfindung darin, eine Einrichtung umfassend eine Tischplatte, ein Untergestell sowie Befestigungsschrauben der eingangs genannten Gattung zur Verfügung zu stellen, welche eine Befestigung der Tischplatte an den verschiedensten marktgängigen Typen von Befestigungskreuzen oder alternativen Befestigungsvorrichtungen der Tischuntergestelle ermöglicht.

Die Lösung dieser Aufgabe liefert eine Einrichtung der eingangs genannten Art mit den Merkmalen des Anspruchs 1.

In den meisten Fällen umfasst das eingangs genannte Lochbild der Befestigungseinrichtung beispielsweise vier oder acht Löcher. Die Erfindung ist jedoch so ausgelegt, dass auch andere gängige Lochbilder abgedeckt werden.

Erfindungsgemäß ist vorgesehen, dass die Tischplatte in ihre Unterseite eingebrachte Schlitze oder Nuten aufweist, die so verlaufen, dass sie sich bei Auflegen der Tischplatte auf das Befestigungskreuz mit den Löchern oder Aufnahmen der Befestigung zur Deckung bringen lassen und dass Befestigungsschrauben, vorzugsweise gewindefurchende Schrauben, aber auch metrische- oder Kunststoffschrauben, vorgesehen sind, die jeweils im Bereich der Schlitze oder Nuten in die Tischplatte einschraubbar sind. Diese Schlitze oder Nuten haben jeweils eine solche Längserstreckung, dass sie alle Bereiche, an denen für die verschiedenen Befestigungen Bohrlöcher benötigt werden, abdecken.

Durch diese Lösung erreicht man, dass bereits an den im Handel üblichen Befestigungsvorrichtungen vorhandene Befestigungslöcher für die Anbringung der Befestigungsvorrichtung an der Tischplatte genutzt werden können. Man muss lediglich die Befestigungsschraube durch das Befestigungsloch der Befestigung hindurch stecken und trifft dann auf einen Schlitz in der Tischplatte. Da die Schrauben eine höhere Materialfestigkeit als die Tischplatte aufweisen, können diese dann direkt in den Schlitz der Tischplatte eingeschraubt werden. Der Bohrvorgang beim montierenden Betrieb entfällt. Da die Befestigungsvorrichtung wie z.B. Befestigungskreuze unabhängig von ihrer konkreten Form und Größe in der Regel immer Befestigungslöcher an ihren Stützarmen aufweisen und diese Stützarme sich wegen der Kreuzform in der Regel in einem etwa rechten Winkel kreuzen, kommen dann die Befestigungslöcher immer mit den entsprechend vom Hersteller in die Tischplatte eingebrachten Schlitzen irgendwo zur Deckung.

Gemäß einer bevorzugten Weiterbildung der Erfindung ist vorgesehen, dass wenigstens ein Schlitz oder eine Nut sich in der Draufsicht auf die Unterseite der Tischplatte gesehen entlang einer Linie erstreckt, deren lineare Verlängerung sich durch den Mittelpunkt einer im Umriss kreisförmigen, rechteckigen, quadratischen oder vieleckigen Tischplatte erstreckt. Vorzugsweise sind wenigstens zwei Schlitze oder Nuten vorgesehen, die sich in der Draufsicht auf die Unterseite der Tischplatte gesehen jeweils entlang von Linien erstrecken, deren jeweilige Verlängerungen sich etwa im Bereich des Mittelpunkts einer im Umriss kreisförmigen, rechteckigen, quadratischen oder vieleckigen Tischplatte kreuzen. Besonders bevorzugt sind wenigstens zwei Schlitze oder Nuten vorhanden, die sich in der Draufsicht auf die Unterseite der Tischplatte gesehen jeweils entlang von Linien erstrecken, deren jeweilige Verlängerungen sich etwa im Bereich des Mittelpunkts einer im Umriss kreisförmigen, rechteckigen, quadratischen oder vieleckigen Tischplatte etwa in einem rechten Winkel kreuzen.

Hierdurch wird die Möglichkeit geschaffen, die Lochbilder der gängigen Typen von Befestigungen, welche üblicherweise für die Befestigung von Tischplatten an Untergestellen verwendet werden, weitestgehend abzudecken.

Die Tischplatten können beispielsweise aus HPL-Werkstoffen bestehen, die eine vergleichsweise große Härte haben. Man kann die Schlitze oder Nuten beispielsweise herstellerseitig in die Unterseite der Tischplatten fräsen, wozu man Diamant- oder Hartmetall-Fräser benutzen kann. Da wegen der Härte der Tischplatten beim Fräsvorgang ein vergleichsweise hoher Verschleiß an dem Werkzeug entsteht, empfiehlt es sich, die Schlitze nicht über die gesamte Länge vom Mittelpunkt der Tischplatte bis zum Außenrand durchgehen zu lassen, sondern man kann längliche Schlitze einbringen, die sich entlang einer Linie erstrecken, aber durch ungeschlitzte Bereiche unterbrochen sein können. Mit einer Reihe solcher Schlitze oder Nuten kann man dann immer noch das zu erwartende Lochmuster der gängigen Befestigungskreuze abdecken.

Die Schlitze oder Nuten können sich beispielsweise entlang einer sich etwa durch den Mittelpunkt der Tischplatte, in der Draufsicht auf die Unterseite der Tischplatte gesehen, erstreckenden Linie erstrecken, wovon wenigstens ein Schlitz oder eine Nut diesseits des Mittelpunkts und wenigstens ein Schlitz oder eine Nut jenseits des Mittelpunkts angeordnet ist. Bei einer rechteckigen oder quadratischen oder vieleckigen Tischplatte ist der Mittelpunkt in diesem Sinne der Kreuzungspunkt der Diagonalen.

Der Vorteil der erfindungsgemäßen Lösung liegt darin, dass die Schlitze oder Nuten beim Hersteller in die Unterseite der Tischplatte eingebracht werden. Der montierende Betrieb muss somit nicht in die Tischplatte bohren. Der Hersteller hat wiederum den Vorteil, dass er nicht mehr zahlreiche verschiedene Tischplatten mit unterschiedlichen Bohrmustern herstellen, vorhalten oder auf Anforderung herstellen muss, was eine aufwändige Logistik bedingt. Er stellt nunmehr nur noch eine Plattentype mit der jeweils geforderten Umrissform und Größe her, beispielsweise quadratisch, rund, rechteckig, sechseckig, Freiformplatten etc., mit einem jeweils einheitlichen Schlitzmuster.

Herstellerseitig sind zudem die geeigneten Maschinen vorhanden, die es ermöglichen, ein sehr präzises Schlitzmuster beispielsweise in die Platte so zu fräsen, dass einerseits eine jeweils ausreichende Schlitztiefe für eine sichere Befestigung am Befestigungskreuz gegeben ist und andererseits die Schlitze sich nicht zu tief in die Platte hinein erstrecken, so dass die Platte nicht durch die Tiefe geschwächt wird. Empirisch hat sich gezeigt, dass man dazu bevorzugt die Schlitztiefe so wählt, dass sich die Schlitze oder Nuten in ihrer Tiefe mindestens über etwa die Hälfte der Materialstärke bis etwa vier fünftel der Materialstärke der Tischplatte in diese hinein erstrecken. Verwendet man beispielsweise Tischplatten mit einer Plattenstärke von 13 mm, ist eine Schlitztiefe von zwischen mindestens 6,5 mm, sofern der Platz vorhanden ist, ist eine Tiefe von 8 mm zu bevorzugen, und maximal 11 mm besonders bevorzugt. Dies hängt natürlich unter anderem auch von dem verwendeten Plattenwerkstoff und Länge und Stärke der verwendeten Befestigungsschrauben ab.

Die Schlitzbreite wird so gewählt, dass die jeweilige Breite der Schlitze etwa 75 % bis etwa 90 % des Durchmessers der für die Befestigung der Tischplatte am Befestigungskreuz dienenden Befestigungsschrauben im Gewindebereich beträgt. Es ist vorteilhaft, als Befestigungsschrauben gewindefurchende Schrauben zu verwenden. Man muss bei der Schlitzbreite darauf achten, dass die Schlitze nicht zu breit sind, so dass die gewindefurchende Schraube nicht genügend Halt hat, dass die Schlitze aber auch nicht zu schmal sind, da dann beim anschließenden Montieren der Schraubvorgang zu viel Kraft erfordern würde. Verwendet man für die Befestigung beispielsweise M5-Schrauben, sollte die Schlitzbreite somit zwischen etwa 3,75 mm und etwa 4,5 mm betragen.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine Draufsicht auf die Unterseite einer beispielhaften rechteckigen erfindungsgemäßen Tischplatte mit Schlitzmuster;
Figur 2 eine Draufsicht auf die Unterseite einer beispielhaften runden erfindungsgemäßen Tischplatte mit Schlitzmuster;
Figur 3 eine Detailansicht eines Ausschnitts durch eine Tischplatte im Längsschnitt im Bereich eines Schlitzes quer zum Schlitz geschnitten;
Figur 4 eine Ansicht auf die Unterseite einer Tischplatte mit aufgelegtem Befestigungskreuz;
Figur 5 eine vergrößerte Detailansicht eines Ausschnitts aus Figur 4, wobei eine gewindefurchende Befestigungsschraube erkennbar ist.

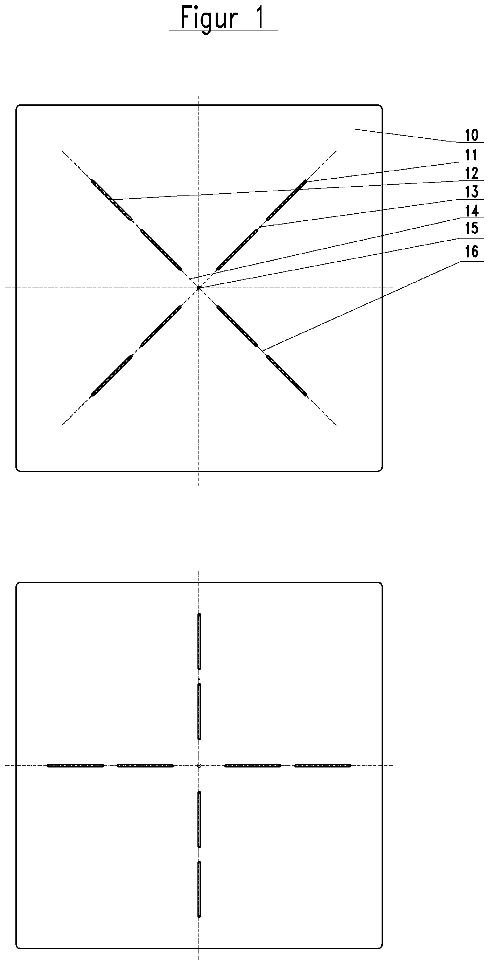

Zunächst wird auf die Figur 1 Bezug genommen, die eine schematisch vereinfachte Ansicht auf die Unterseite einer erfindungsgemäßen Tischplatte zeigt. Die Tischplatte selbst ist mit dem Bezugszeichen 10 bezeichnet und hat im vorliegenden Fall beispielhaft einen quadratischen Grundriss. Die erfindungsgemäßen Schlitze 11, 12 erstrecken sich in dem Beispiel entlang zweier diagonal verlaufender Linien 13, 14, welche durch den Mittelpunkt 15 der Tischplatte verlaufen und sich dort in einem rechten Winkel kreuzen. Die beiden Linien sind somit hier deckungsgleich mit den beiden Diagonalen des Quadrats der Umrissform der Tischplatte 10. Allerdings gehen die Schlitze 11, 12 selbst in dem Ausführungsbeispiel nicht durch den Mittelpunkt 15. Die Schlitze, die sich entlang jeweils einer der beiden Linien 13, 14 erstrecken, gehen auch nicht bis zur äußeren Ecke der Tischplatte 10 durch, sondern mit etwas Abstand davor. Außerdem sind die Schlitze 11, 12 in Richtung der Linien 13, 14 jeweils unterbrochen durch nicht geschlitzte Bereiche 16 der Tischplatte. Diese Art des Schlitzbildes reicht aus, um mit insgesamt möglichst wenig Schlitzlänge eine Vielzahl unterschiedlicher Lochbilder von Löchern der Befestigungen abzudecken.

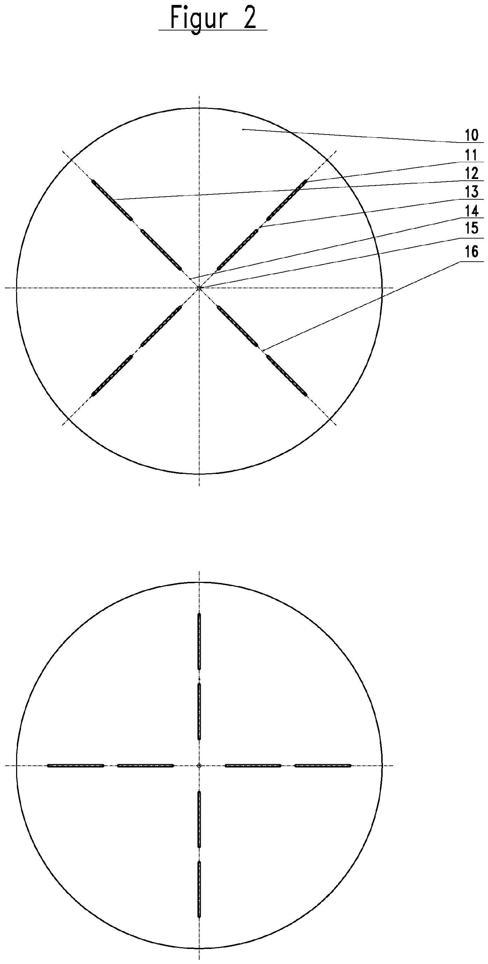

Eine Erstreckung der Schlitze 11, 12 jeweils über die gesamte Diagonale der Tischplatte 10 ist nicht erforderlich und würde zu einem größeren Verschleiß bei den Werkzeugen führen, die zur Einbringung der Schlitze verwendet werden. Außerdem will man die Tischplatte 10 nicht mehr schlitzen als unbedingt notwendig, um eine Schwächung des Materials und damit Bruchgefahr zu vermeiden. In dem Ausführungsbeispiel gemäß Figur 1 ist auf den beiden sich kreuzenden diagonalen Linien 13, 14 jeweils eine Anzahl von vier Schlitzen 11, bzw. 12 vorhanden, von denen je zwei benachbarte Schlitze 11, 12 jeweils durch einen ungeschlitzten Bereich 16 unterbrochen sind. Insgesamt sind in der Tischplatte 10 gemäß Figur 1 somit acht Schlitze vorhanden, zwischen denen insgesamt sechs ungeschlitzte Bereiche liegen, wobei die Schlitze mit Abstand von den Ecken der Tischplatte enden und wobei der mittlere Bereich der Tischplatte ebenfalls ungeschlitzt ist. Eine Unterbrechung der Schlitze ist jedoch technisch nicht nötig, sondern dient ausschließlich der Standzeit Verlängerung der Werkzeuge sowie einer Höheren Stabilität der Tischplatte. Bei der Abbildung 2 ist das Schlitzbild um 45° gedreht. Auch diese, sowie auch jede andere, um den Mittelpunkt gedrehte Position lässt sich realisieren. Eine symmetrische Anordnung bzw. Länge der Schlitze ist ebenfalls nicht notwendig.

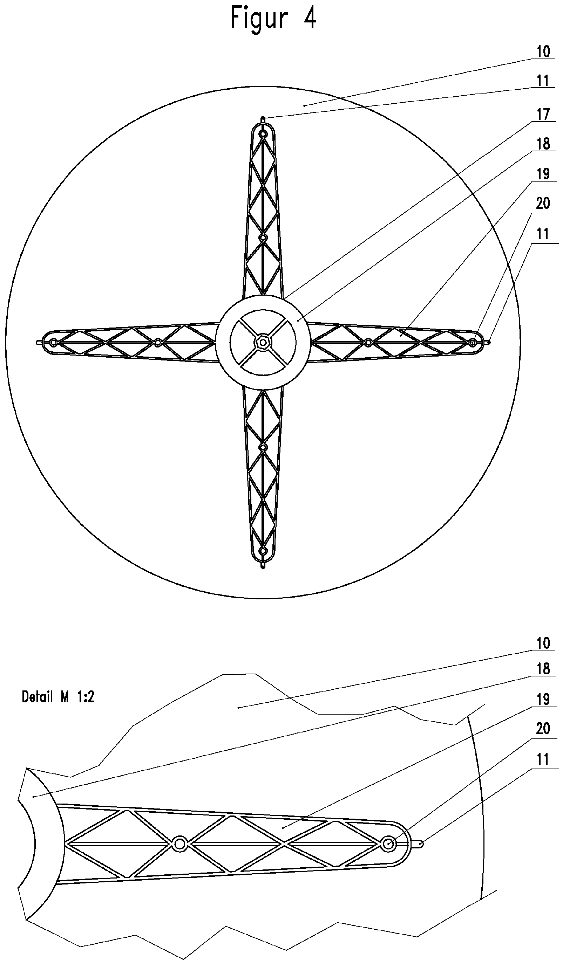

Figur 2 zeigt ein weiteres Ausführungsbeispiel der vorliegenden Erfindung, wobei hier die Tischplatte 10 einen kreisrunden Umriss aufweist. Man erkennt im Vergleich mit Figur 1, dass in Figur 2 das Muster der Schlitze 11, 12 und ungeschlitzten Bereiche 16 ähnlich ist wie bei dem Ausführungsbeispiel gemäß Figur 1. Die Linien, entlang derer sich die Schlitze erstrecken, gehen hier durch den Mittelpunkt der kreisrunden Tischplatte 10 und kreuzen sich dort in einem rechten Winkel. Es handelt sich somit um zwei sich rechtwinklig kreuzende Radien der Kreisform, so dass die Schlitze auf einer kreuzförmigen Anordnung liegen, die in etwa dem Verlauf der Arme eines in Figur 4 dargestellten Befestigungskreuzes entspricht. Der Vergleich der Figuren 1 und 2 zeigt, dass man für beide Tischplatten gleichartige Befestigungskreuze verwenden kann.

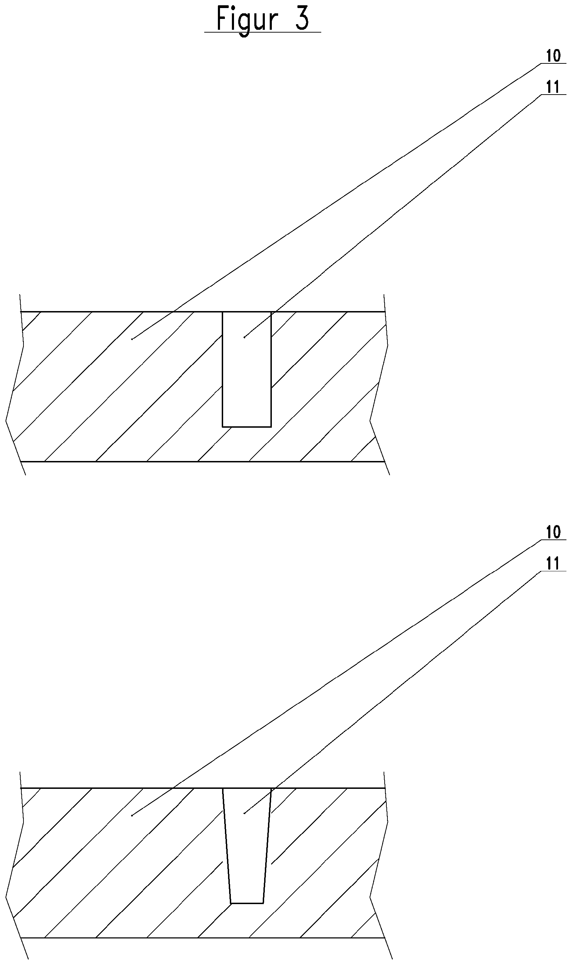

Figur 3 zeigt einen kleinen Ausschnitt eines vertikalen Schnitts durch eine Tischplatte 10 im Bereich eines der Schlitze 11. Man kann hier erkennen, dass der Schlitz wie ein Nut in die Tischplatte hinein gefräst ist, so dass er sich durch den überwiegenden Teil der Materialstärke der Tischplatte erstreckt, aber natürlich nicht vollständig durch diese hindurch geht. Der Schlitz ist hier quer zu seiner Längserstreckung geschnitten und man erkennt somit die Breite des Schlitzes, welche etwas geringer ist als das Gewindemaß der für die Anbringung verwendeten Befestigungsschrauben, so dass gewährleistet ist, dass die Schraube an den Seiten des Schlitzes in die Tischplatte hinein schneidet. Wie in der Abbildung B dargestellt ist diese Funktion auch mit einem konisch zulaufenden Schlitz möglich.

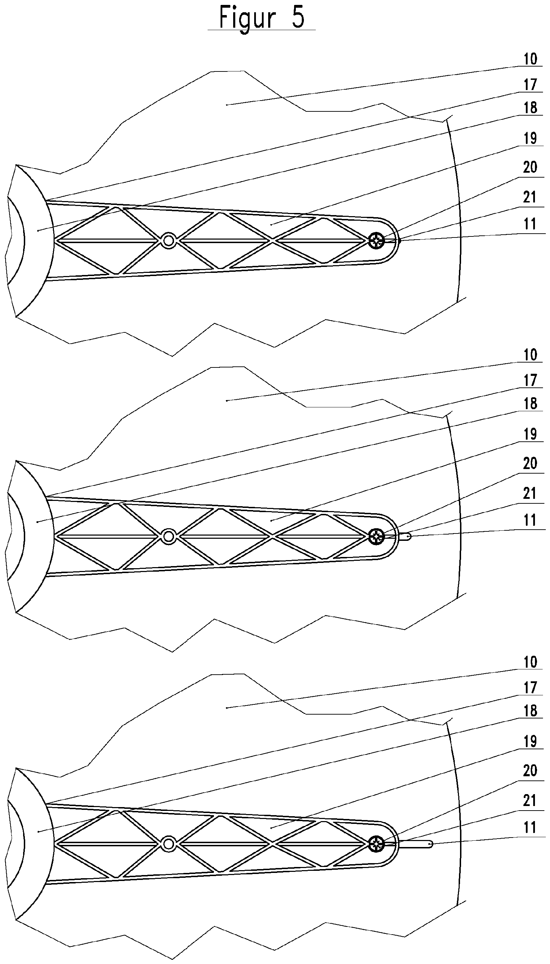

In Figur 4 ist eine Ansicht auf die Unterseite einer Tischplatte 10 dargestellt mit einem Befestigungskreuz 17 des Untergestells. Ein solches Befestigungskreuz 17 wird an der Tischplatte 10 angeschraubt, wobei an dem Befestigungskreuz 17 wiederum eine Standsäule oder dergleichen angebracht wird. Derartige Befestigungen sind in verschiedenen Formen und Größen im Handel. Diese haben in der Regel wie in Figur 4 gezeigt vier von einem etwa runden Mittelstück 18ausgehende kreuzförmig angeordnete Stützarme 19, in denen sich diverse Löcher 20 befinden, durch die dann die Befestigungsschrauben (hier nicht dargestellt, siehe dazu Figur 5) hindurch gesteckt und in die Tischplatte 10 hinein geschraubt werden. Man sieht, dass diese Löcher 20 sich an unterschiedlichen Positionen des Befestigungskreuzes 17 befinden können, teils radial weiter außen und teils radial weiter innen an den Stützarmen 19. Da unterschiedliche Befestigungskreuze verwendet werden und diese Löcher daher sich in unterschiedlichsten Positionen relativ zur Tischplatte befinden können, ist die erfindungsgemäße Einbringung der Schlitze 11 in die Tischplatte 10 vorteilhaft. Die Schlitze 11 erstrecken sich wie man sieht bei auf der Tischplatte aufgelegtem Befestigungskreuz etwa entlang der Mitte der Stützarme, dort wo sich die Löcher 20 befinden, so dass nach dem Auflegen des Befestigungskreuzes sich in jedem Fall unterhalb eines Lochs ein Schlitz befindet.

Figur 5 zeigt in vergrößerter Detailansicht einen äußeren Abschnitt eines der Stützarme 19 des Befestigungskreuzes 17, wobei man sieht, dass sich der Schlitz 11 der Tischplatte noch weiter nach radial außen hin erstreckt, so dass die Schraubposition variabel ist und beispielsweise auch ein größeres Befestigungskreuz mit weiter außen liegenden Löchern angeschraubt werden kann. In Figur 5 erkennt man auch eine der Befestigungsschrauben 21, in diesem Fall ist eine gewindefurchende (selbstschneidend) Schraube verwendet worden, welche durch das Loch 20 hindurchgreift und in den Schlitz 11, welcher etwas schmaler ist als das Schraubengewinde, so eingeschraubt werden kann, dass die Schraube hält.

### Bezugszeichenliste

- 10: Tischplatte
- 11: Schlitz
- 12: Schlitz
- 13: Linie
- 14: Linie
- 15: Mittelpunkt
- 16: ungeschlitzte Bereiche
- 17: Befestigungskreuz
- 18: Mittelstück
- 19: Stützarme
- 20: Löcher
- 21: Befestigungsschrauben

## Patentansprüche

1. Einrichtung umfassend eine Tischplatte, ein Untergestell sowie Befestigungsschrauben, wobei das Untergestell ein Befestigungskreuz oder einen Befestigungsteller aufweist, auf dem die Tischplatte aufliegt und wobei das Untergestell unterseitig an der Tischplatte anzuschrauben ist, wobei dieses Befestigungskreuz oder dieser Befestigungsteller ein definiertes Lochbild mit mehreren Löchern oder Aufnahmen für die jeweils durch diese Löcher hindurch zu steckenden Befestigungsschrauben aufweist, mittels derer das Befestigungskreuz oder der Befestigungsteller an der Tischplatte angeschraubt wird,
wobei die Tischplatte (10) in ihre Unterseite eingebrachte Schlitze (11) oder Nuten aufweist, die so verlaufen, dass sie sich bei Auflegen der Tischplatte auf das Befestigungskreuz oder den Befestigungsteller, mit den Löchern (20) oder Aufnahmen des Befestigungskreuzes (17) oder Befestigungstellers zur Deckung bringen lassen und wobei die Befestigungsschrauben (21) jeweils in den Schlitzen (11) oder Nuten in die Tischplatte (10) einschraubbar sind, wobei wenigstens zwei sich entlang einer Linie (13, 14) erstreckende Schlitze (11) oder Nuten vorgesehen sind, die jeweils durch nicht geschlitzte Abschnitte (16) der Tischplatte (10) unterbrochen sind,
**dadurch gekennzeichnet, dass** die Befestigungsschrauben gewindefurchende Schrauben sind, wobei die jeweilige Breite der Schlitze (11) etwa 75 % bis etwa 90 % des Durchmessers der für die Befestigung der Tischplatte (10) am Befestigungskreuz (17) oder Befestigungsteller dienenden gewindefurchenden Befestigungsschrauben (21) im Gewindebereich beträgt.

2. Einrichtung nach Anspruch 1,
**dadurch gekennzeichnet, dass** wenigstens ein Schlitz (11) oder eine Nut sich in der Draufsicht auf die Unterseite der Tischplatte (10) gesehen entlang einer Linie erstreckt, deren lineare Verlängerung sich durch den Mittelpunkt (15) einer im Umriss kreisförmigen, rechteckigen, quadratischen, vieleckigen oder freiförmigen Tischplatte (10) erstreckt.

3. Einrichtung nach Anspruch 1 oder 2,
**dadurch gekennzeichnet, dass** wenigstens zwei Schlitze (11) oder Nuten sich in der Draufsicht auf die Unterseite der Tischplatte (10) gesehen jeweils entlang von Linien erstrecken (13, 14), deren jeweilige Verlängerungen sich etwa im Bereich des Mittelpunkts (15) einer im Umriss kreisförmigen, rechteckigen, quadratischen oder vieleckigen Tischplatte (10) kreuzen.

4. Einrichtung nach einem der Ansprüche 1 bis 3,
**dadurch gekennzeichnet, dass** wenigstens zwei Schlitze (11) oder Nuten sich in der Draufsicht auf die Unterseite der Tischplatte (10) gesehen jeweils entlang von Linien (13, 14) erstrecken, deren jeweilige Verlängerungen sich etwa im Bereich des Mittelpunkts (15) einer im Umriss kreisförmigen, rechteckigen, quadratischen, vieleckigen oder freiförmigen Tischplatte (10) etwa in einem rechten Winkel kreuzen.

5. Einrichtung nach einem der Ansprüche 1 bis 4,
**dadurch gekennzeichnet, dass** wenigstens zwei Schlitze (11) oder Nuten entlang einer sich etwa durch den Mittelpunkt (15) der Tischplatte (10), in der Draufsicht auf die Unterseite der Tischplatte gesehen, erstreckenden Linie (13, 14) vorgesehen sind, wovon wenigstens einer diesseits des Mittelpunkts und wenigstens einer jenseits des Mittelpunkts angeordnet ist.

6. Einrichtung nach einem der Ansprüche 1 bis 5, **dadurch gekennzeichnet, dass** sich die Schlitze (11) oder Nuten in ihrer Tiefe über etwa die Hälfte der Materialstärke bis etwa vier fünftel der Materialstärke der Tischplatte (10) erstrecken.

7. Einrichtung nach einem der Ansprüche 1 bis 6,
**dadurch gekennzeichnet, dass** insgesamt wenigstens vier, vorzugsweise etwa vier bis acht, jeweils untereinander durch ungeschlitzte Bereiche (16) der Tischplatte (10) unterbrochene Schlitze (11) oder Nuten vorgesehen sind, die entlang von zwei sich kreuzenden Linien (13, 14) angeordnet sind.

8. Einrichtung nach einem der Ansprüche 1 bis 7, **dadurch gekennzeichnet, dass** die Tischplatte (10) aus einem HPL-Werkstoff besteht.

## Claims

1. A device comprising a table top, a substructure, and fastening screws, wherein the substructure has a fastening cross or a fastening plate, on which the table top rests, and wherein the substructure is to be screwed to the underside of the table top, wherein this fastening cross or this fastening plate has a defined hole pattern with a plurality of holes or mounts for the fastening screws that are to be inserted through these holes and that are used to screw the fastening cross or the fastening plate to the table top,
wherein the underside of the table top (10) has slots (11) or grooves formed in it that run in such a way as to align with the holes (20) or mounts of the fastening cross (17) or fastening plate when placing the table top on the fastening cross or the fastening plate, and wherein the fastening screws (21) can be screwed into the table top (10) in the slots (11) or grooves, wherein at least two slots (11) or grooves extending along a line (13, 14) and which are interrupted by non-slotted portions (16) of the table top (10) are provided,
**characterised in that** the fastening screws are self-tapping screws, wherein the width of the slots (11) is approximately 75% to approximately 90% of the diameter of the self-tapping fastening screws (21) used to fasten the table top (10) on the fastening cross (17) or fastening plate in the thread region.

2. The device according to claim 1,
**characterised in that**, as seen from a top view of the underside of the table top (10), at least one slot (11) or a groove extends along a line of which the linear extent passes through the midpoint (15) of a table top (10) having a circular, rectangular, quadratic, polygonal or freeform contour.

3. The device according to claim 1 or 2,
**characterised in that**, as seen from a top view of the underside of the table top (10), at least two slots (11) or grooves extend along lines (13, 14) of which the respective extents cross approximately in the region of the midpoint (15) of a table top (10) having a circular, rectangular, quadratic or polygonal contour.

4. The device according to one of claims 1 to 3,
**characterised in that**, as seen from a top view of the underside of the table top (10), at least two slots (11) or grooves extend along lines (13, 14) of which the respective extents cross at approximately a right angle approximately in the region of the midpoint (15) of a table top (10) having a circular, rectangular, quadratic, polygonal or freeform contour.

5. The device according to one of claims 1 to 4,
**characterised in that**, as seen from a top view of the underside of the table top, at least two slots (11) or grooves are provided along a line (13, 14) extending approximately through the midpoint (15) of the table top (10), at least one of which slots or grooves is arranged on one side of the midpoint and at least one is arranged on the other side of the midpoint.

6. The device according to one of claims 1 to 5, **characterised in that**, in terms of their depth, the slots (11) or grooves extend over approximately half of the material thickness to approximately four fifths of the material thickness of the table top (10).

7. The device according to one of claims 1 to 6,
**characterised in that** a total of at least four, preferably of approximately four to eight, slots (11) or grooves, each interrupted by non-slotted regions (16) of the table top (10), are provided and are arranged along two intersecting lines (13, 14).

8. The device according to one of claims 1 to 7, **characterised in that** the table top (10) consists of an HPL material.

## Revendications

1. Dispositif comprenant un plateau de table, un bâti ainsi que des vis de fixation, dans lequel le bâti présente une croix de fixation ou une rondelle de fixation sur laquelle repose le plateau de table, et dans lequel le bâti se visse au bas du plateau de table, dans lequel cette croix de fixation ou cette rondelle de fixation présente des trous définis avec plusieurs trous ou réceptions pour les vis de fixation à insérer à travers ces trous, au moyen desquelles la croix ou la rondelle de fixation est fixée au plateau de table,
dans lequel le plateau de table (10) présente des fentes (11) ou rainures pratiquées dans sa face inférieure dont le tracé permet que lorsque le plateau de table est posé sur la croix ou la rondelle de fixation, elles soient recouvertes par les trous (20) ou les réceptions de la croix de fixation (17) ou de la rondelle de fixation, et dans lequel les vis de fixation (21) peuvent être respectivement vissées dans le plateau de table (10) dans les fentes (11) ou les rainures, dans lequel au moins deux fentes (11) ou rainures s'étendant le long d'une ligne (13, 14) sont prévues qui sont respectivement interrompues par des tronçons non fendus (16) du plateau de table (10),
**caractérisé en ce que** les vis de fixation sont des vis auto-taraudeuses, dans lequel la largeur respective des fentes (11) fait au niveau du filetage environ 75 % à environ 90 % du diamètre des vis de fixation (21) auto-taraudeuses servant à la fixation du plateau de table (10) sur la croix de fixation (17) ou la rondelle de fixation.

2. Dispositif selon la revendication 1,
**caractérisé en ce qu'**au moins une fente (11) ou une rainure s'étend, vu en vue aérienne sur la face inférieure du plateau de table (10), le long d'une ligne dont le prolongement linéaire s'étend à travers le point médian (15) d'un plateau de table (10) au pourtour circulaire, rectangulaire, carré, polygonal ou de forme libre.

3. Dispositif selon la revendication 1 ou 2,
**caractérisé en ce qu'**au moins deux fentes (11) ou rainures s'étendent, vu en vue aérienne sur la face inférieure du plateau de table (10), respectivement le long de lignes (13, 14) dont les prolongements respectifs se croisent environ au niveau du point médian (15) d'un plateau de table (10) au pourtour circulaire, rectangulaire, carré, polygonal ou de forme libre.

4. Dispositif selon l'une des revendications 1 à 3,
**caractérisé en ce qu'**au moins deux fentes (11) ou rainures s'étendent, vu en vue aérienne sur la face inférieure du plateau de table (10), le long de lignes (13, 14) dont les prolongements respectifs se croisent en un angle droit environ au niveau du point médian (15) d'un plateau de table (10) au pourtour circulaire, rectangulaire, carré, polygonal ou de forme libre.

5. Dispositif selon l'une des revendications 1 à 4,
**caractérisé en ce qu'**au moins deux fentes (11) ou rainures s'étendent, vu en vue aérienne sur la face inférieure du plateau de table, le long d'une ligne (13, 14) s'étendant environ à travers le point médian (15) du plateau de table (10), dont au moins une est disposée de ce côté du point médian et au moins une de l'autre côté du point médian.

6. Dispositif selon l'une des revendications 1 à 5, **caractérisé en ce que** les fentes (11) ou rainures s'étendent dans leur profondeur sur environ la moitié de l'épaisseur de matériau jusqu'à environ quatre cinquièmes de l'épaisseur de matériau du plateau de table (10).

7. Dispositif selon l'une des revendications 1 à 6,
**caractérisé en ce qu'**en tout quatre, de préférence environ quatre à huit, fentes (11) ou rainures interrompues entre elles par des zones non fendues (16) du plateau de table (10) sont prévues, qui sont disposées le long de deux lignes (13, 14) qui se croisent.

8. Dispositif selon l'une des revendications 1 à 7, **caractérisé en ce que** le plateau de table (10) est en matériau HPL.
